# EUROPÄISCHE PATENTSCHRIFT

(11) **EP 2 877 870 B1**
(45) Veröffentlichungstag und Bekanntmachung des Hinweises auf die Patenterteilung: **02.10.2019**
(21) Anmeldenummer: 13740001.6
(22) Anmeldetag: 23.07.2013
(51) Int. Cl.: G01S 7/521, G01S 15/93

(54) **ULTRASCHALLSENSORVORRICHTUNG MIT EINEM VERBESSERTEN ENTKOPPLUNGSRING UND KRAFTFAHRZEUG**
ULTRASONIC SENSOR DEVICE HAVING AN IMPROVED DECOUPLING RING AND MOTOR VEHICLE
DISPOSITIF CAPTEUR À ULTRASONS DOTÉ D'UN ANNEAU DE DÉCOUPLAGE AMÉLIORÉ ET VÉHICULE AUTOMOBILE

(30) Priorität: 24.07.2012 DE 102012106696
(43) Veröffentlichungstag der Anmeldung: 03.06.2015
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: EIDEL, Oliver, 74321 Bietigheim-Bissingen (DE); TRIEBL, Stefan, 75417 Mühlacker (DE); WEHLING, Hans-Wilhelm, 74074 Heilbronn (DE); JUNG, Thomas, 74075 Heilbronn (DE); NEFT, Hubert, 71723 Grossbottwar (DE); MAX, Stephan, 38518 Gifhorn (DE)
(74) Vertreter: Hofstetter, Schurack & Partner
(86) Internationale Anmeldenummer: PCT/EP2013/065501
(87) Internationale Veröffentlichungsnummer: WO 2014/016288

(56) Entgegenhaltungen:
- WO-A1-2009/144545
- WO-A1-2013/117442
- DE-A1-102010 045 971

## Beschreibung

Die Erfindung betrifft eine Ultraschallsensorvorrichtung für ein Kraftfahrzeug, mit einem Ultraschallsensor, welcher eine topfförmige Membran zum Aussenden und/oder Empfangen von Ultraschallsignalen aufweist, mit einem Entkopplungsring, welcher um die Membran herum an einem Außenumfang der Membran anliegend angeordnet ist, und mit einem Versteifungselement, welches um den Entkopplungsring herum angeordnet ist und vorzugsweise aus Keramik gebildet ist. Die Erfindung betrifft außerdem ein Kraftfahrzeug mit einer solchen Ultraschallsensorvorrichtung.

Ultraschallsensoren sind in bekannter Weise im Frontbereich und im Heckbereich des Fahrzeugs, insbesondere an Stoßfängern, verbaut. Sie sind Fahrerassistenzeinrichtungen zugeordnet und liefern Informationen über die Fahrzeugumgebung, nämlich über die Abstände zwischen dem Kraftfahrzeug einerseits und den in seiner Umgebung befindlichen Hindernissen andererseits. Fahrerassistenzeinrichtungen können beispielsweise Parkassistenzsysteme, Systeme zur Todwinkelüberwachung, Systeme zur Abstandshaltung, Spurüberwachungssysteme, Bremsassistenzsysteme und dergleichen sein.

Es ist bereits Stand der Technik, dass derartige Ultraschallwandler in Stoßfängern unverdeckt und somit sichtbar verbaut werden. Dies bedeutet, dass sie in durchgängigen Aussparungen in dem Stoßfänger angeordnet sind und außenseitig sichtbar sind. Eine topfförmige Membran des Ultraschallsensors erstreckt sich hier durch die durchgängige Aussparung des Stoßfängers hindurch, so dass die Frontseite der Membran, über welche Ultraschallwellen ausgesendet und empfangen werden, bündig mit der äußeren Oberfläche des Stoßfängers abschließt. Diese Ultraschallsensoren haben jedoch den entscheidenden Nachteil, dass sie sichtbar angeordnet sind und somit das gesamte optische Bild des Kraftfahrzeugs beeinträchtigen.

Deshalb richtet sich das Interesse vorliegend auf verdeckt bzw. versteckt verbaute Ultraschallwandler, welche bei einer Betrachtung des Stoßfängers von außen nicht sichtbar und durch den Stoßfänger abgedeckt sind. Hier befindet sich der Ultraschallsensor an einer Rückseite des Stoßfängers, so dass die Frontseite der Membran - gegebenenfalls über einen zusätzlichen Montagedeckel - mit der Rückseite des Stoßfängers in Anlage gebracht ist. Bei derartig verbauten Ultraschallsensoren direkt hinter dem Stoßfänger werden die Ultraschallsignale durch das Material des Stoßfängers hindurch gesendet und empfangen. Somit schwingt ein Bereich des Stoßfängers zusammen mit der Membran. Es ist somit oft erforderlich, dass dieser schwingende Bereich des Stoßfängers mit Hilfe eines aus Keramik gebildeten Versteifungselements begrenzt wird. Es ist beispielsweise bekannt, ein aus Keramik gebildetes Versteifungselement bereitzustellen, welches eine Durchgangsöffnung aufweist, durch welche sich die topfförmige Membran des Ultraschallsensors hindurch erstreckt, so dass das Versteifungselement um die Membran herum angeordnet ist und außerdem - gegebenenfalls über einen Montagedeckel - mit der Rückseite des Stoßfängers in Anlage gebracht ist. Somit sind bei verdeckt hinter dem Stoßfänger verbauten Sensoren jedoch wesentlich höhere Anforderungen an die Positionierung, die Klebung und die nun einzuhaltenden Toleranzen gegeben. Der Ultraschallsensor muss hinter dem Stoßfänger mechanisch fest angebracht werden. Dies ist erforderlich, damit der Ultraschallsensor verlustfrei durch den Stoßfänger senden kann. Um die Sende- und Empfangsverluste gering zu halten, muss die Sendefläche des Ultraschallsensors - also die Frontfläche der Membran - mechanisch fest mit dem Stoßfänger verbunden werden oder aber mit einem verlustfreien Koppelelement bzw. Montagedeckel zwischen der Frontseite der Membran und dem Stoßfänger ausgebildet werden. Um die eingeleiteten Schwingungen lokal zu halten und die Senderichtcharakteristik zu beeinflussen, wird dazu das oben genannte Versteifungselement mit einem großen E-Modul eng um den Wandler bzw. um die Membran benötigt. Auch dieser Versteifungsring muss mechanisch fest mit dem Stoßfänger bzw. dem Halter verbunden sein.

Eine verdeckte Anordnung eines elektroakustischen Wandlers ist beispielsweise aus der Druckschrift DE 42 38 924 A1 bekannt.

Vorliegend geht es also insbesondere um verdeckt angeordnete Ultraschallsensoren, welche an der Rückseite des Verkleidungsteils angeordnet sind und Ultraschallsignale durch das Material des Verkleidungsteils hindurch senden bzw. empfangen. Einerseits ist bei solchen Ultraschallsensoren ein Entkopplungsring um die Membran herum erforderlich, damit die Schwingung der Membran nicht auf andere, benachbarte Komponenten übertragen wird, sondern nur lokal gehalten werden kann; andererseits ist insbesondere bei verdeckten Sensoren ein Versteifungselement - etwa aus Keramik wie in dem Dokument DE 42 38 924 A1 - um den Ultraschallsensor herum erforderlich, damit der mitschwingende Bereich des Verkleidungsteils auf einen definierten Bereich begrenzt werden kann. Nun hat sich herausgestellt, dass bei verdeckt angeordneten Ultraschallsensoren, bei denen die Ultraschallwellen durch das Material des Verkleidungsteils hindurch gesendet werden, ein gewisser Anteil der Ultraschallwellen nicht nach vorne, also durch das Verkleidungsteil hindurch, sondern auch nach hinten - quasi in Richtung zum Innenraum des Fahrzeugs - als ungewollter Rückschall abgestrahlt wird. Zwar erfolgt die primäre und die meiste Abstrahlung der Ultraschallsignale durch das Verkleidungsteil hindurch, jedoch wird auch ein nicht zu vernachlässigender Anteil der Schallenergie in den Raum hinter dem Verkleidungsteil abgegeben. Diese Energie reflektiert dann an Karosserieteilen des Fahrzeugs und gelangt als Reflektionen wieder zum Ultraschallsensor, was zu Scheinechos bzw. zu Scheinzielen im Nahbereich führt und somit einen Funktionsausfall des jeweiligen Fahrerassistenzsystems zur Folge haben kann, nämlich beispielsweise des automatischen Parkhilfesystems. Eine besondere Herausforderung besteht somit darin, eine Ausbreitung des vom Ultraschallsensor abgegebenen Ultraschalls nach hinten zu vermeiden und vorzugsweise auf ein Maß (in dB) unterhalb der Empfangsschwelle des Sensors zu reduzieren.

Aus der DE 10 2010 045 971 A1 ist eine Anordnung mit einem Stoßfänger und einem Ultraschallsensor bekannt, der einen Entkopplungsring aufweist. Entsprechend ist aus der WO 2009/144545 A1 und der nachveröffentlichten WO 2013/117442 A1 bekannt.

Es ist Aufgabe der Erfindung, eine Lösung aufzuzeigen, wie bei einer Ultraschallsensorvorrichtung der eingangs genannten Gattung der Anteil der nach hinten abgestrahlten Schallenergie bzw. der Rückschall im Vergleich zum Stand der Technik reduziert werden kann.

Diese Aufgabe wird erfindungsgemäß durch eine Ultraschallsensorvorrichtung mit den Merkmalen gemäß Patentanspruch 1 gelöst. Vorteilhafte Ausführungen der Erfindung sind Gegenstand der abhängigen Patentansprüche, der Beschreibung und der Figuren.

Eine erfindungsgemäße Ultraschallsensorvorrichtung für ein Kraftfahrzeug umfasst einen Ultraschallsensor, welcher eine topfförmige Membran zum Aussenden und/oder Empfangen von Ultraschallsignalen aufweist, wie auch einen Entkopplungsring, der um die Membran herum an einem Außenumfang der Membran anliegend angeordnet ist, sowie ein Versteifungselement, welches um den Entkopplungsring herum angeordnet ist.

Der Entkopplungsring hat einen umlaufenden, an dem Außenumfang der Membran - insbesondere vollumfänglich - anliegenden ersten radialen Entkopplungsbereich sowie einen zweiten radialen Entkopplungsbereich mit einer axialen Stirnseite, welche an einer axialen Stirnseite des Versteifungselements anliegt.

In vorteilhafter Weise wird durch eine solche Ausgestaltung des Entkopplungsrings eine axiale Berührung bzw. ein axialer Kontakt zwischen dem Entkopplungsring einerseits und dem Versteifungselement andererseits erreicht, wodurch der Bereich der Membran besonders wirkungsvoll nach hinten akustisch abgedichtet werden kann. Somit wird der nach hinten abgegebene Ultraschall zuverlässig unterdrückt, so dass eine Schallausbreitung in Richtung zum Innenraum des Fahrzeugs verhindert oder zumindest deutlich reduziert werden kann. Der zweite Entkopplungsbereich kann nämlich axial zwischen einem Gehäuse des Ultraschallsensors einerseits und der axialen Stirnseite des Versteifungselements andererseits verpresst sein.

Es ist dabei vorgesehen, dass die axiale Stirnseite des Entkopplungsrings eine Frontseite bildet, welche in Richtung zu einem Verkleidungsteil des Kraftfahrzeugs zeigt und somit an einer dem Ultraschallsensor zugewandten und von dem Verkleidungsteil abgewandten Rückseite des Versteifungselements anliegt.

Der Entkopplungsring übernimmt also quasi zwei verschiedene Funktionen: Zum einen verhindert der Entkopplungsring, dass die Membran die angrenzenden Bauteile berührt, und sorgt auch dafür, dass die Membran nicht auf die angrenzenden Bauteile übertragen wird. Andererseits verhindert der Entkopplungsring auch eine Abstrahlung des Ultraschalls nach hinten in Richtung zum Innenraum des Fahrzeugs.

Eine solche akustische Abdichtung kann auch dazu genutzt werden, um das Eintreten von Feuchtigkeit in den Bereich der Membran zu verhindern. Somit können auch Eisbrücken verhindert werden, welche die Funktionsweise der Ultraschallsensorvorrichtung beeinträchtigen könnten.

Also hat der Entkopplungsring zwei radiale Entkopplungsbereiche, nämlich einen an dem Außenumfang der Membran anliegenden ersten Entkopplungsbereich, wie auch einen um diesen ersten Entkopplungsbereich herum angeordneten zweiten radialen Entkopplungsbereich, dessen axiale Stirnseite an der axialen Stirnseite des Versteifungselements anliegt. In einer Ausführungsform kann dabei vorgesehen sein, dass der zweite Entkopplungsbereich durch zumindest einen radial von dem ersten Entkopplungsbereich beabstandet angeordneten und sich in axialer Richtung erstreckenden Steg bzw. Kragen gebildet ist, dessen axiale Stirnseite bzw. Spitzseite an der axialen Stirnseite des Versteifungselements anliegt. Durch einen solchen Steg ist somit eine Dichtrippe gebildet, durch welche der Bereich der Membran nach hinten akustisch abgedichtet wird. Somit kann außerdem erreicht werden, dass - im Querschnitt gesehen - der Entkopplungsring lediglich eine punktuelle bzw. punktförmige Kontaktstelle zum Versteifungselement aufweist, nämlich an der axialen Stirnseite. Ein solcher axialer Kontakt mit dem Versteifungselement ermöglicht eine bessere Abdichtung gegen den Rückschall.

Es hat sich dabei als vorteilhaft erwiesen, wenn der zumindest eine Steg zur axialen Stirnseite hin verjüngt ausgebildet ist. Gerade dann kann eine spitzartige bzw. spitzförmige axiale Stirnseite des Stegs geschaffen werden, welche in Kontakt mit der axialen Stirnseite des Versteifungselements steht. Somit wird eine Schalldämpfungsstruktur geschaffen, mit welcher der Rückschall im Vergleich zum Stand der Technik deutlich reduziert wird.

Hinsichtlich der Ausgestaltung des zweiten radialen Entkopplungsbereichs können nun zwei unterschiedliche Ausführungsformen vorgesehen sein:
Zum einen kann vorgesehen sein, dass der zweite radiale Entkopplungsbereich durch einen einzigen, umlaufend um den ersten Entkopplungsbereich herum ausgebildeten Steg gebildet ist, dessen axiale Stirnseite an der Stirnseite des Versteifungselements ringförmig umlaufend anliegt. Somit ist eine Kontaktstelle zwischen dem Steg und dem Versteifungselement ringförmig und 360° umlaufend ausgebildet. Eine solche Ausgestaltung sorgt einerseits für eine zuverlässige akustische Abdichtung; andererseits kann somit auch eine Abdichtung gegen Feuchtigkeit ermöglicht werden, so dass Eisbrücken verhindert werden können.

Zum anderen kann für eine zuverlässige akustische Schalldämpfung auch vorgesehen sein, dass zumindest zwei solche Stege in Umfangsrichtung beabstandet voneinander verteilt angeordnet sind, welche jeweils eine axiale Stirnseite aufweisen, die mit der axialen Stirnseite des Versteifungselements in Anlage gebracht sind. Somit sind mehrere, in Umfangsrichtung verteilte Kontaktstellen zwischen dem zweiten radialen Entkopplungsbereich einerseits und dem Versteifungselement andererseits ausgebildet. Auch diese materialsparende Ausgestaltung des Entkopplungsringes sorgt für eine wirkungsvolle Schallabdichtung des Bereiches der Membran.

Es ist bevorzugt, wenn der erste radiale Entkopplungsbereich in einem radialen Abstand zu dem Versteifungselement angeordnet ist, so dass insbesondere der Entkopplungsring das Versteifungselement ausschließlich über den zweiten Entkopplungsbereich berührt.

Somit ist ein umlaufender radialer Luftspalt zwischen dem Versteifungselement einerseits und dem ersten radialen Entkopplungsbereich ausgebildet. Es hat sich nämlich herausgestellt, dass eine solche Ausgestaltung eine zuverlässige Unterdrückung des Rückschalls gewährleistet.

Es hat sich als besonders vorteilhaft erwiesen, wenn der zweite Entkopplungsbereich eine radial nach außen hin abstehende bzw. sich nach außen erstreckende Dichtlippe aufweist, welche an einem radialen Innenumfang des Versteifungselements anliegt und mit diesem somit dichtend zusammenwirkt. Diese Dichtlippe gehört also vorzugsweise zu dem oben genannten Steg. Bei dieser Ausführungsform ist der Entkopplungsring folglich insbesondere sowohl axial zwischen dem Sensorgehäuse und der Stirnseite des Versteifungselements als auch radial zwischen der Membran und dem Versteifungselement verpresst bzw. eingeklemmt. Durch Vorsehen einer solchen - insbesondere umlaufenden - Dichtlippe lässt sich die Ausbreitung der Schallwellen in Richtung des Fahrzeuginnenraums annähernd vollständig unterdrücken. Die Dichtlippe kann sich dabei schräg radial nach außen hin erstrecken, so dass sowohl eine axiale als auch eine radiale Richtungskomponente der Erstreckung gegeben ist. Dann lässt sich die Dichtlippe einfacher in die Durchgangsöffnung des Versteifungselements einführen.

Vorzugsweise ist der Entkopplungsring aus einem weich-elastischen Material, insbesondere aus Silikon und/oder aus TPE-Kunststoff (Thermoplastische Elastomere), gebildet. Ein weich-elastisches Material sorgt hier neben einer besonders guten Schallunterdrückung auch für eine zuverlässige Abdichtung gegen Flüssigkeiten. Die Eigenschaften eines solchen Materials bleiben außerdem über einen relativ großen Temperaturbereich konstant. Durch ein derartiges weich-elastisches Material wird außerdem die Verklebung der Membran nicht beeinträchtigt. Nicht zuletzt lässt sich ein solches Material verpressen und hat somit eine federnde Wirkung, was zusätzlich noch die akustische und/oder flüssige Abdichtung unterstützt.

In einer Ausführungsform ist vorgesehen, dass die Ultraschallsensorvorrichtung einen Halter für den Ultraschallsensor aufweist. Der Halter kann ein Aufnahmeteil mit einer Aufnahme für das Versteifungselement aufweisen. Zwischen einem Boden der Aufnahme und einer dem Ultraschallsensor zugewandten Rückseite des Versteifungselements kann eine Dämpfungsscheibe angeordnet sein, welche zur Dämpfung des Rückschalls ausgebildet ist. Somit können optional noch die Restschwingungen gedämpft werden, welche in Richtung nach hinten abgegeben werden. Eine solche Dämpfungsscheibe ermöglicht also die Reduktion des Rückschalls auf ein Minimum.

Vorzugsweise ist die Dämpfungsscheibe aus einem weich-elastischen Material, nämlich beispielsweise aus Silikon und/oder aus TPE-Kunststoff, gebildet. Sie kann also aus dem gleichen Material wie der Entkopplungsring gebildet sein. Durch ein solches weich-elastisches Material kann hier erreicht werden, dass die Dämpfungsscheibe zwischen dem Boden des Aufnahmeteils einerseits und der Rückseite des Versteifungsrings andererseits eingeklemmt wird, so dass neben einer zuverlässigen Schalldämpfung auch ein Toleranzausgleich im verbauten Zustand erfolgen kann.

Es hat sich als besonders vorteilhaft herausgestellt, wenn die Dämpfungsscheibe an ihrer dem Versteifungselement zugewandten - insbesondere gesamten bzw. vollständigen - Vorderseite eine Schallreduktionsstruktur aufweist, über welche die Dämpfungsscheibe nur punktuell bzw. punktförmig an der Rückseite des Versteifungselements anliegt. Eine solche Schallreduktionsstruktur kann beispielsweise durch eine Noppenstruktur und somit durch eine Vielzahl von Noppen gebildet sein, welche an der Vorderseite der Dämpfungsscheibe - insbesondere regelmäßig - in einer gemeinsamen Ebene verteilt angeordnet sind. Diese Noppen weisen also in Richtung zum Versteifungselement und liegen mit ihren Spitzen an der Rückseite des Versteifungselements an. Eine solche Oberfläche, welche zum Versteifungselement eine spezielle Oberflächenstruktur-wie beispielsweise Noppengeometrie - aufweist, verhindert eine flächige Berührung der Vorderseite der Dämpfungsscheibe mit der Rückseite des Versteifungselements und lenkt somit auch den Rückschall in verschiedene Richtungen ab, so dass die Energie dieses Schallsignals reduziert wird. Eine einzelne Noppe kann dabei im Querschnitt so aussehen, dass die die Noppe bildenden Wände bzw. Schenkel miteinander einen Winkel von beispielsweise 50° bis 70°, insbesondere einen Winkel von 60°, einschließen.

Hinsichtlich der Ausgestaltung der Dämpfungsscheibe sind nun unterschiedliche Ausführungsformen vorgesehen:
Die Dämpfungsscheibe kann als von dem Aufnahmeteil separates Bauteil ausgebildet sein. Eine solche Dämpfungsscheibe kann ohne viel Aufwand zwischen den Boden des Aufnahmeteils einerseits und das Versteifungselement andererseits eingelegt werden, so dass sie mit ihrer vorzugsweise ebenen und glatten Rückseite flächig in Anlage mit dem Boden des Aufnahmeteils gebracht wird. Hier kann die Dämpfungsscheibe beispielsweise an den Boden geklebt werden.

Alternativ kann auch vorgesehen sein, dass die Dämpfungsscheibe an den Boden der Aufnahme des Aufnahmeteils angespritzt ist. Bei dieser einstückigen Ausgestaltung erübrigt sich ein zusätzliches Bauteil, so dass die Montage der Ultraschallsensorvorrichtung vereinfacht und die Montagezeit reduziert wird.

Die Dämpfungsscheibe kann auch einstückig mit dem Entkopplungsring ausgebildet sein. Somit ist die Anzahl der benötigten Bauteile minimal.

Alternativ kann vorgesehen sein, dass die Dämpfungsscheibe als von dem Entkopplungsring separates Bauteil ausgebildet ist. Diese Ausführungsform erweist sich beispielsweise bei einem etwas dickeren Versteifungselement, bei welchem gegebenenfalls eine etwas größere Entfernung zwischen dem Entkopplungsring und der Dämpfungsscheibe vorgesehen ist.

Ein erfindungsgemäßes Kraftfahrzeug umfasst eine erfindungsgemäße Ultraschallsensorvorrichtung.

Die mit Bezug auf die erfindungsgemäße Ultraschallsensorvorrichtung vorgestellten bevorzugten Ausführungsformen und deren Vorteile gelten entsprechend für das erfindungsgemäße Fahrzeug.

Bei dem Fahrzeug kann vorgesehen sein, dass die Ultraschallsensorvorrichtung an einer Rückseite eines Verkleidungsteils, beispielsweise eines Stoßfängers, des Fahrzeugs verdeckt angeordnet ist, so dass die Ultraschallsignale des Ultraschallsensors durch das Material dieses Verkleidungsteils hindurch ausgesendet und/oder empfangen werden. Die Frontseite der Membran kann dabei direkt in Anlage mit der Rückseite des Verkleidungsteils gebracht sein oder über einen Montagedeckel des oben genannten Halters mit der Rückseite des Verkleidungsteils gekoppelt sein.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung eine Explosionsansicht einer Ultraschallsensorvorrichtung gemäß einer Ausführungsform der Erfindung;
- Fig. 2: in schematischer Darstellung eine erste Ausgestaltung eines Entkopplungsrings;
- Fig. 3: in schematischer Darstellung eine zweite Ausgestaltung des Entkopplungsrings;
- Fig. 4: in schematischer Darstellung eine dritte bevorzugte Ausgestaltung eines Entkopplungsrings;
- Fig. 5: in schematischer und perspektivischer Darstellung ein Ultraschallsensor mit dem Entkopplungsring gemäß Fig. 4;
- Fig. 6: in schematischer Darstellung eine Schnittansicht durch die Ultraschallsensorvorrichtung;
- Fig. 7: in vergrößerter Darstellung einen Bereich der Ultraschallsensorvorrichtung gemäß Fig. 6; und
- Fig. 8: in schematischer Darstellung eine Schnittansicht durch einen Abschnitt einer Dämpfungsscheibe.

In den Figuren werden gleiche oder funktionsgleiche Elemente mit den gleichen Bezugszeichen versehen.

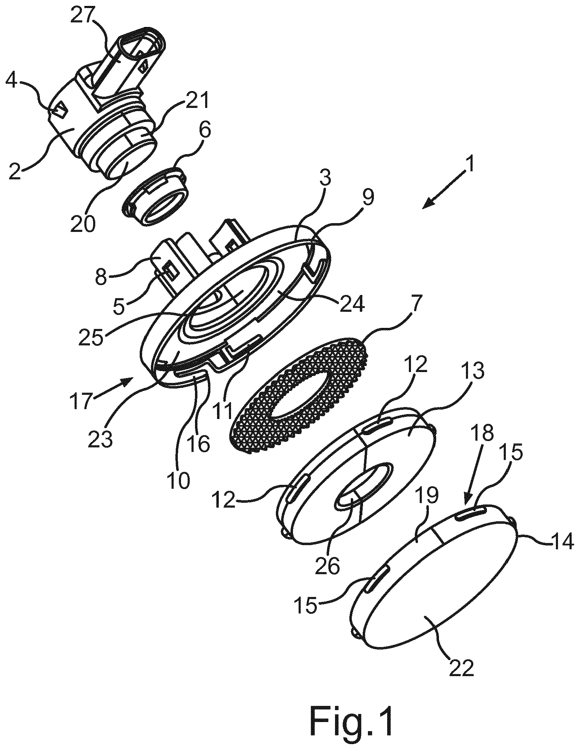

In Fig. 1 ist in schematischer Explosionsdarstellung eine Ultraschallsensorvorrichtung 1 gezeigt. Diese umfasst einen Ultraschallsensor 2, welcher zerstörungsfrei lösbar in einem Aufnahmeteil 3 befestigbar ist, nämlich insbesondere verrastbar. Dazu sind beispielsweise zwei Rastelemente 4 an dem Ultraschallsensor 2 ausgebildet, welche zur Verrastung in korrespondierende Rastlaschen 5 eines Aufnahmeschachts 8 des einstückig aus Kunststoff ausgebildeten Aufnahmeteils 3 vorgesehen sind.

Zur Ultraschallsensorvorrichtung 1 gehört auch ein Entkopplungsring 6 sowie optional eine Dämpfungsscheibe 7.

Das Aufnahmeteil 3 umfasst darüber hinaus einen Untersatz 9, welcher zylinderförmig ausgebildet ist und einen größeren Durchmesser als der Aufnahmeschacht 8 aufweist. An einem Rand 10 des Untersatzes 9 sind an einem inneren Umfang Raststrukturen 11 ausgebildet, in welche Rastelemente 12 eines ringförmigen und scheibenförmigen sowie aus Keramik gebildeten Versteifungselements 13 verrasten können. Optional kann auch ein Montagedeckel 14 vorgesehen sein, welcher einstückig aus Kunststoff ausgebildet und gegebenenfalls über seine Rastelemente 15 in die Raststrukturen 11 oder aber andere Rastöffnungen 16 des Untersatzes 9 verrasten kann. Wird ein solcher Montagedeckel 14 verwendet, so kann gegebenenfalls auf die Rastelemente 12 des Versteifungselements 13 verzichtet werden.

Durch das Aufnahmeteil 3 sowie optional den Montagedeckel 14 ist ein Halter 17 gebildet. Dadurch kann eine hochflexible und variable Ausgestaltung der Ultraschallsensorvorrichtung 1 gewährleistet werden und unterschiedlichste Einbaumöglichkeiten der Ultraschallsensorvorrichtung 1 an verschiedensten Einbaupositionen bzw. Einbausituationen an einem Verkleidungsteil eines Kraftfahrzeugs ermöglicht werden.

Das Versteifungselement 13 ist als separates Bauteil ausgebildet und beispielsweise aus Keramik. Es dient einerseits zur Dämpfung der Schwingungsübertragung auf das Verkleidungsteil; andererseits dient es zur Begrenzung der Signalabstrahlung des Ultraschallsensors 2.

Der Montagdeckel 14 weist auf seiner dem Ultraschallsensor 2 zugewandten Rückseite 18 eine Vertiefung auf, welche umfangsseitig und umlaufend durch einen Steg 19 begrenzt ist, an welchen die Rastelemente 15 angeformt sind. Im verbauten Zustand erstreckt sich der Ultraschallsensor 2 in diese Vertiefung hinein, so dass eine Frontseite 20 einer topfförmigen Membran 21 des Ultraschallsensors 2 an der Rückseite 18 des Montagedeckels 14 anliegt. Eine Vorderseite 22 des Montagedeckels 14 liegt dann an der Rückseite des Verkleidungsteils an. Wird kein solcher Montagedeckel 14 verwendet, so wird die Frontseite 20 der Membran 21 direkt mit der Rückseite des Verkleidungsteils verklebt.

Die Membran 21 ist beispielsweise vollständig aus Aluminium hergestellt.

Wie aus Fig. 1 weiterhin zu erkennen ist, weist der Untersatz 9 des Aufnahmeteils 3 an seiner dem Versteifungselement 13 zugewandten Seite eine Aufnahme 23 auf, welche einen Boden 24 aufweist. In dem Boden 24 ist eine Öffnung 25 ausgebildet, durch welche sich die Membran 21 im verbauten Zustand hindurch erstreckt, um in Anlage mit der Rückseite 18 des Montagedeckels 14 oder aber mit der Rückseite des Verkleidungsteils zu gelangen. Eine entsprechende Durchgangsöffnung 26 ist auch in dem keramischen Versteifungselement 13 ausgebildet.

Der Ultraschallsensor 2 hat außerdem einen Stecker 27, über welchen der Ultraschallsensor 2 mit einer elektronischen Steuereinrichtung des Kraftfahrzeugs elektrisch gekoppelt werden kann.

Nun richtet sich das Interesse auf den Entkopplungsring 6 sowie die Dämpfungsscheibe 7. Beide Komponenten können aus einem weich-elastischen Material gebildet sein, wie beispielsweise aus Silikon und/oder aus einem TPE-Kunststoff, also einem thermoplastischen Elastomer.

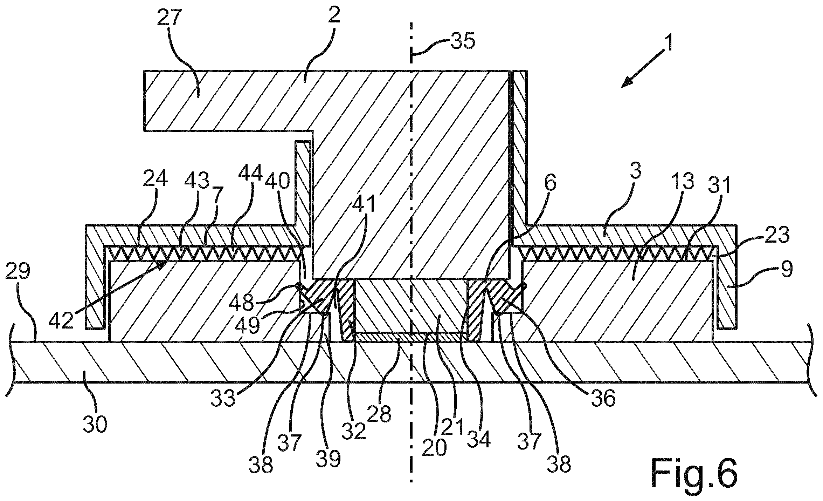

Bezug nehmend nun auf Fig. 6, in welcher eine Schnittdarstellung durch die Ultraschallsensorvorrichtung 1 gezeigt ist, wird die Ausgestaltung des Entkopplungsrings 6 näher erläutert. Bei der Ausgestaltung gemäß Fig. 6 wurde auf den Montagedeckel 14 verzichtet, so dass die topfförmige Membran 21 über eine Klebstoffschicht 28 mit einer Rückseite 29 eines als Stoßfänger ausgebildeten Verkleidungsteils 30 verbunden ist. Somit liegt die Frontseite 20 der Membran 21 an der Rückseite 29 an. Um die Membran 21 herum ist der Entkopplungsring 6 angeordnet, und um diesen Entkopplungsring 6 herum wiederum ist das Versteifungselement 13 aus Keramik angeordnet. Dieses Versteifungselement 13 liegt in der Aufnahme 23 des Untersatzes 9 des Aufnahmeteils 3. Die Dämpfungsscheibe 7 ist dabei zwischen einer Rückseite 31 des Versteifungselements 13 einerseits und dem Boden 24 der Aufnahme 23 andererseits angeordnet.

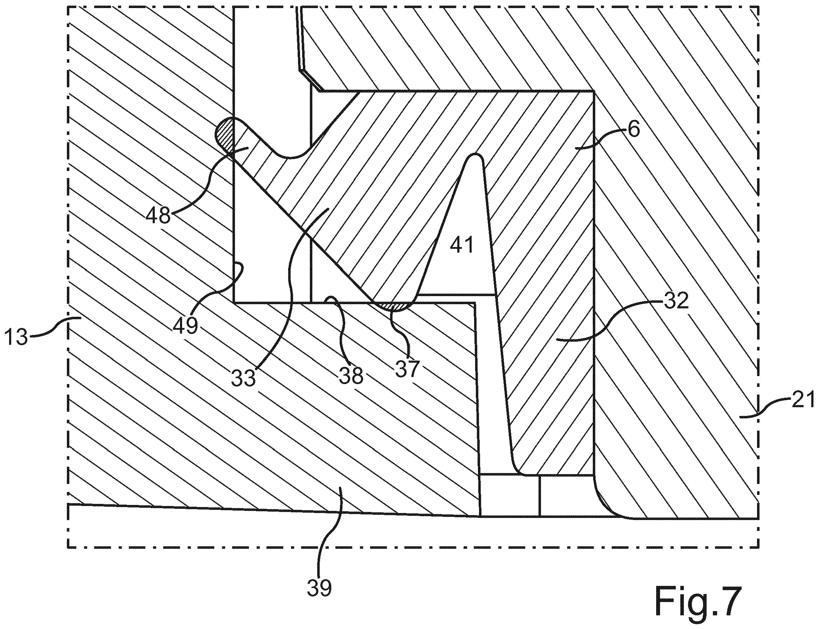

Wie aus Fig. 6 sowie aus der vergrößerten Darstellung gemäß Fig. 7 zu erkennen ist, besteht der Entkopplungsring 6 im Ausführungsbeispiel aus zwei radialen Bereichen, nämlich einem ersten radialen Entkopplungsbereich 32 sowie einem zweiten radialen Entkopplungsbereich 33. Der erste Entkopplungsbereich 32 liegt an einem Außenumfang der topfförmigen Membran 21 an. Dieser erste Entkopplungsbereich 32 ist dabei voll umlaufend ausgebildet, so dass er die Membran 21 vollumfänglich umgreift bzw. umgibt.

Demgegenüber ist der zweite Entkopplungsbereich 33 in einem radialen Abstand zur Membran 21 angeordnet und außerdem in einem radialen Abstand zum ersten Entkopplungsbereich 32. Der zweite Entkopplungsbereich 33 ist im Wesentlichen in Form eines in axialer Richtung bzw. entlang einer Längsachse 35 des Ultraschallsensors 2 verlaufenden und in Richtung zum Verkleidungsteil 30 weisenden (zumindest einen) Stegs 36 ausgebildet und hat eine spitzförmige axiale und frontseitige, dem Verkleidungsteil 30 zugewandte Stirnseite 37, welche in punktförmige Anlage mit einer axialen Stirnseite 38 eines radialen Vorsprungs 39 des Versteifungselements 13 gebracht ist. Diese axiale Stirnseite 38 des Vorsprungs 39 bildet gleichzeitig eine Rückseite des Vorsprungs 39 bzw. des Versteifungselements 13, welche dem Ultraschallsensor 2 zugewandt ist. Der Vorsprung 39 ist dabei dadurch gebildet, dass an einem Innenumfang 49 des Versteifungselements 13 eine eckige bzw. rechteckförmige Aussparung 40 ausgebildet ist. Diese Aussparung 40 ist umlaufend ausgebildet, so dass auch der Vorsprung 39 sich umlaufend um die Membran 21 herum erstreckt.

Der zumindest eine Steg 36 hat also an der axialen Stirnseite 37 eine Spitze, welche an der axialen Stirnseite 38 des Vorsprungs 39 anliegt. Dabei ist der Steg 36 in Richtung zum Vorsprung 39 des Versteifungselements 13 und somit in axialer Richtung zur Stirnseite 37 verjüngt ausgebildet, so dass der Steg 36 unterschiedliche radiale Breiten entlang der Längsachse 35 aufweist. Dieser Steg 36 erstreckt sich auch parallel zu dem ersten Entkopplungsbereich 32, welcher an dem Außenumfang 34 der Membran 21 anliegt. Insgesamt ist somit zwischen dem ersten und dem zweiten Entkopplungsbereich 32, 33 eine umlaufende, O-förmige Einbuchtung 41 ausgebildet, welche einen gemeinsamen Zwischenraum mit dem zwischen dem Versteifungselementen 13 und dem ersten Entkopplungsbereich 32 liegenden Zwischenraum bildet.

Dem Steg 36 ist außerdem eine Dichtlippe 48 zugeordnet, welche von dem restlichen zweiten Entkopplungsbereich 33 bzw. dem Steg 36 schräg in radialer Richtung nach außen absteht und sich bis hin zu dem Innenumfang 49 des Versteifungselements 13 erstreckt. Die Dichtlippe 48 ist vorzugsweise umlaufend ausgebildet. Sie liegt an dem Innenumfang 48 dichtend an wirkt somit mit dem Innenumfang 49 dichtend zusammen. Die Dichtlippe 48 hat den Vorteil, dass einerseits die Schallausbreitung nach hinten vollständig unterdrückt werden kann und andererseits auch eine zuverlässige Abdichtung der Membran 21 gegen Schmutz und Flüssigkeit gewährleistet ist.

Der Entkopplungsring 6 wird folglich sowohl axial zwischen dem Sensorgehäuse und dem Vorsprung 39 als auch radial zwischen der Membran 21 und dem Innenumfang 49 verpresst und dort eingeklemmt.

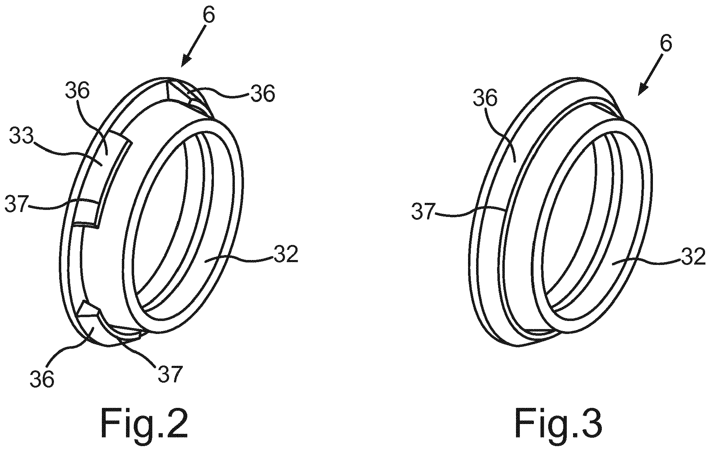

Der Steg 36 kann dabei ein einziger Steg sein, welcher umlaufend bzw. vollständig und ohne Unterbrechung um die Membran 21 herum angeordnet ist, so dass ein umlaufender und ringförmiger Kontakt zwischen dem zweiten Entkopplungsbereich 33 und dem Vorsprung 39 gegeben ist. Alternativ kann jedoch auch vorgesehen sein, dass mehrere Stege 36 ausgebildet sind, welche in Umfangsrichtung der Membran 21 beabstandet zueinander verteilt angeordnet sind. Entsprechend kann auch eine einzige umlaufende Lippe 48 vorgesehen sein oder es können mehrere solche Lippen 48 bereitgestellt sein, nämlich insbesondere so viele, wie es Stege 36 gibt. Bezug nehmend nun auf die Fig. 2 bis 4 werden diese Ausführungsformen näher erläutert:
In Fig. 2 ist dabei ein Entkopplungsring 6 in perspektivischer Darstellung gezeigt, bei welchem mehrere solche Stege 36 mit jeweils einer Stirnseite 37 vorgesehen sind. Wie aus Fig. 2 eindeutig zu erkennen ist, sind diese Stege 36 in Umfangsrichtung beabstandet zueinander angeordnet. Es können beispielsweise vier oder fünf solche Stege 36 vorgesehen sein, welche äquidistant in Umfangsrichtung verteilt angeordnet sind. Im Beispiel gemäß Fig. 2 ist die Dichtlippe 48 nicht vorgesehen, kann aber gleichwohl bei jedem Steg 36 bereitgestellt sein.

In Fig. 3 ist hingegen ein Entkopplungsring 6 dargestellt, bei welchem ein einziger Steg 36 mit einer umlaufenden Stirnseite 37 vorgesehen ist. Dieser Steg 36 erstreckt sich also voll umlaufend und außenumfänglich um den ersten Entkopplungsbereich 32 herum. Auch hier ist die Dichtlippe 48 nicht dargestellt, kann aber auch vorgesehen sein.

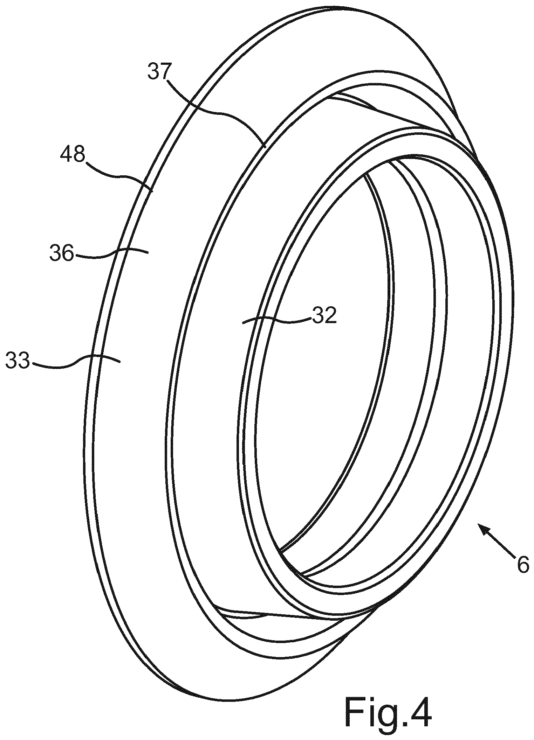

Demgegenüber ist der Entkopplungsring 6 gemäß Fig. 4 mit einer solchen Lippe 48 ausgebildet. Dieser Entkopplungsring 6 entspricht also insgesamt dem Ring gemäß Fig. 3, jedoch mit dem Unterschied, dass er die Dichtlippe 48 aufweist, welche sich schräg radial und axial nach außen hin erstreckt.

Alle drei Entkopplungsringe 6 ermöglichen eine besonders zuverlässige Unterdrückung eines Rückschalls und somit eine Unterdrückung der Schallausbreitung hinter dem Ultraschallsensor 2, so dass auch Reflektionen an Karosserieteilen des Kraftfahrzeugs vermieden werden können, wie auch Scheinechos. Bevorzugt wird jedoch insbesondere der Ring 6 gemäß Fig. 4.

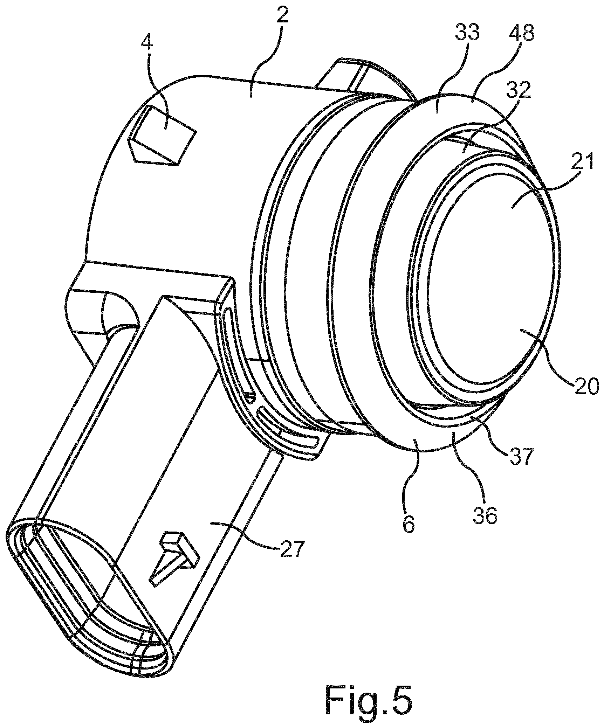

Ein Ultraschallsensor 2 mit einem solchen Entkopplungsring 6, wie er in Fig. 4 gezeigt ist, ist in einer perspektivischen Darstellung in Fig. 5 näher gezeigt. Der Entkopplungsring 6 ist von der axialen Stirnseite bzw. der Frontseite 20 auf die topfförmige Membran 21 aufgesteckt. Er liegt somit an dem äußeren Außenumfang der Membran 21 umlaufend und dichtend an. Hier ist außerdem die nach außen abstehende Dichtlippe 48 besonders gut erkennbar.

Abhängig von der Dicke des Verkleidungsteils 30, seiner Geometrie, von seinem Material sowie abhängig von der Fahrzeugkonstruktion hinter dem Verkleidungsteil kann es erforderlich sein, weitere Maßnahmen zur Unterdrückung des Rückschalls zu treffen. Optional wird also die Dämpfungsscheibe 7 zwischen dem Versteifungselement 13 und dem Aufnahmeteil 3 eingesetzt. Mit erneutem Bezug auf Fig. 6 weist die ringförmige und an die Form des Versteifungselements 13 angepasste Dämpfungsscheibe 7 eine dem Stecker 27 zugewandte Rückseite auf, welche glatt und eben ausgebildet ist und in Anlage mit dem Boden 24 der Aufnahme 23 gebracht ist. Eine dem Versteifungsring 13 zugewandte Vorderseite 42 der Dämpfungsscheibe 7 hat hingegen eine Schallreduktionsstruktur 43 zur Reduktion des Rückschalls, welche im Ausführungsbeispiel eine Noppenstruktur mit einer Vielzahl von gleichmäßig verteilt angeordneten und in einer Ebene senkrecht zur Längsachse 35 liegenden Noppen 44 ist. Diese Noppen 44 weisen in Richtung zum Versteifungselement 13 und liegen mit ihren Spitzen an der Rückseite 31 des Versteifungselements 13 an.

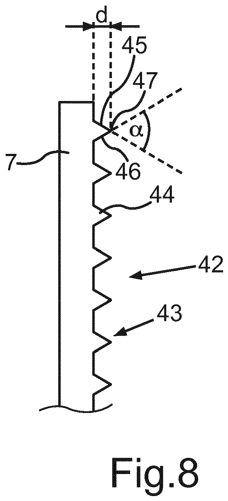

Bezug nehmend nun auf Fig. 8, in welcher ein Abschnitt der Dämpfungsscheibe 7 in Querschnittdarstellung gezeigt ist, haben die Noppen 44 im Querschnitt die Form eines Dreiecks mit zwei Schenkeln 45, 46, welche unter einem Winkel α spitzenförmig aufeinander zu laufen und an einer Spitze 47 zusammengeführt sind. Im Ausführungsbeispiel beträgt der Winkel α 60°. Insgesamt weisen die Noppen 44 eine Kegelform mit dem Öffnungswinkel α, wobei die Spitze 47 dieses Konus in Richtung zum Versteifungselement 13 zeigt und an seiner Rückseite 31 anliegt. Eine Höhe d dieses Kegels, also die Erstreckung entlang der Längsachse 35, beträgt beispielsweise 0,5 mm.

Durch eine solche Ausgestaltung der Dämpfungsscheibe 7 ist lediglich eine punktuelle bzw. punktförmige Kontaktierung zum Versteifungselement 13 gegeben, so dass dadurch sowie aufgrund der Ausgestaltung der Noppen 44 eine zuverlässige Schallunterdrückung nach hinten erzielt werden kann.

Die Dämpfungsscheibe 7 kann dabei als separates Bauteil - gegebenenfalls einstückig mit dem Entkopplungsring 6 - ausgebildet sein. Es kann jedoch auch vorgesehen sein, dass diese Dämpfungsscheibe 7 an den Boden 24 der Aufnahme 23 angespritzt ist, so dass das Aufnahmeteil 3 und die Dämpfungsscheibe 7 einstückig miteinander ausgebildet sind.

## Patentansprüche

1. Ultraschallsensorvorrichtung (1) für ein Kraftfahrzeug, mit einem Ultraschallsensor (2), welcher eine topfförmige Membran (21) zum Aussenden und/oder Empfangen von Ultraschallsignalen aufweist, mit einem Entkopplungsring (6), welcher um die Membran (21) herum an einem Außenumfang (34) der Membran (21) anliegend angeordnet ist, und mit einem Versteifungselement (13), welches um den Entkopplungsring (6) herum angeordnet ist,
**dadurch gekennzeichnet, dass**
der Entkopplungsring (6) einen umlaufenden, an dem Außenumfang (34) der Membran (21) anliegenden ersten radialen Entkopplungsbereich (32) sowie einen zweiten radialen Entkopplungsbereich (33) mit einer axialen Stirnseite (37) aufweist, welche an einer axialen Stirnseite (38) des Versteifungselements (13) anliegt,
wobei die axiale Stirnseite (37) des Entkopplungsrings (6) eine Frontseite bildet, welche in Richtung zu einem Verkleidungsteil (30) des Kraftfahrzeugs zeigt und an einer dem Ultraschallsensor (2) zugewandten und von dem Verkleidungsteil (30) abgewandten Rückseite des Versteifungselements (13) anliegt.

2. Ultraschallsensorvorrichtung (1) nach Anspruch 1,
**dadurch gekennzeichnet, dass**
der zweite Entkopplungsbereich (33) durch zumindest einen radial von dem ersten Entkopplungsbereich (32) beabstandet angeordneten und sich in axialer Richtung erstreckenden Steg (36) gebildet ist, dessen axiale Stirnseite (37) an der axialen Stirnseite (38) des Versteifungselements (13) anliegt.

3. Ultraschallsensorvorrichtung (1) nach Anspruch 2,
**dadurch gekennzeichnet, dass**
der zumindest eine Steg (36) zur axialen Stirnseite (37, 38) hin verjüngt ausgebildet ist.

4. Ultraschallsensorvorrichtung (1) nach Anspruch 2 oder 3,
**dadurch gekennzeichnet, dass**
der zweite radiale Entkopplungsbereich (33) durch einen einzigen, umlaufend um den ersten Entkopplungsbereich (32) herum ausgebildeten Steg (36) gebildet ist.

5. Ultraschallsensorvorrichtung (1) nach Anspruch 2 oder 3,
**dadurch gekennzeichnet, dass**
zumindest zwei Stege (36) in Umfangsrichtung beabstandet voneinander verteilt angeordnet sind, welche jeweils eine axiale Stirnseite (37) aufweisen, die mit der axialen Stirnseite (38) des Versteifungselements (13) in Anlage gebracht sind.

6. Ultraschallsensorvorrichtung (1) nach einem der vorhergehenden Ansprüche,
**dadurch gekennzeichnet, dass**
der erste radiale Entkopplungsbereich (32) in einem radialen Abstand zu dem Versteifungselement (13) angeordnet ist, sodass der Entkopplungsring (6) das Versteifungselement (13) ausschließlich über den zweiten Entkopplungsbereich (33) berührt.

7. Ultraschallsensorvorrichtung (1) nach einem der vorhergehenden Ansprüche,
**dadurch gekennzeichnet, dass**
der zweite radiale Entkopplungsbereich (33) eine sich radial nach außen hin erstreckende Dichtlippe (48) aufweist, welche an einem radialen Innenumfang (49) des Versteifungselements (13) anliegt.

8. Ultraschallsensorvorrichtung (1) nach einem der vorhergehenden Ansprüche,
**dadurch gekennzeichnet, dass**
der Entkopplungsring (6) aus einem weich-elastischen Material, insbesondere aus Silikon und/oder aus TPE-Kunststoff, gebildet ist.

9. Ultraschallsensorvorrichtung (1) nach einem der vorhergehenden Ansprüche,
**dadurch gekennzeichnet, dass**
die Ultraschallsensorvorrichtung (1) einen Halter (17) für den Ultraschallsensor (2) aufweist und der Halter (17) ein Aufnahmeteil (3) mit einer Aufnahme (23) für das Versteifungselement (13) aufweist, wobei zwischen einem Boden (24) der Aufnahme (23) und einer dem Ultraschallsensor (2) zugewandten Rückseite (31) des Versteifungselements (13) eine Dämpfungsscheibe (7) zur Rückschalldämpfung angeordnet ist.

10. Ultraschallsensorvorrichtung (1) nach Anspruch 9,
**dadurch gekennzeichnet, dass**
die Dämpfungsscheibe (7) aus einem weich-elastischen Material, insbesondere aus Silikon und/oder aus TPE-Kunststoff, gebildet ist.

11. Ultraschallsensorvorrichtung (1) nach Anspruch 9 oder 10,
**dadurch gekennzeichnet, dass**
die Dämpfungsscheibe (7) an ihrer dem Versteifungselement (13) zugewandten Vorderseite (42) eine Schallreduktionsstruktur (43), insbesondere eine Noppenstruktur, zur punktuellen Anlage an der Rückseite (31) des Versteifungselements (13) aufweist.

12. Ultraschallsensorvorrichtung (1) nach einem der Ansprüche 9 bis 11,
**dadurch gekennzeichnet, dass**
die Dämpfungsscheibe (7) als ein von dem Aufnahmeteil (3) separates Bauteil ausgebildet ist.

13. Ultraschallsensorvorrichtung (1) nach einem der Ansprüche 9 bis 12,
**dadurch gekennzeichnet, dass**
die Dämpfungsscheibe (7) an den Boden (24) der Aufnahme (23) des Aufnahmeteils (3) angespritzt ist.

14. Ultraschallsensorvorrichtung (1) nach einem der Ansprüche 9 bis 13,
**dadurch gekennzeichnet, dass**
die Dämpfungsscheibe (7) einstückig mit dem Entkopplungsring (6) ausgebildet ist.

15. Ultraschallsensorvorrichtung (1) nach einem der Ansprüche 9 bis 14,
**dadurch gekennzeichnet, dass**
die Dämpfungsscheibe (7) als ein von dem Entkopplungsring (6) separates Bauteil ausgebildet ist.

## Claims

1. An ultrasonic sensor device (1) for a motor vehicle, comprising an ultrasonic sensor (2), which comprises a pot-shaped membrane (21) for emitting and/or receiving ultrasonic signals, comprising a decoupling ring (6), which is arranged to fit around the membrane (21) in contact with an outer circumference (34) of the membrane (21), and comprising a stiffening element (13), which is arranged around the decoupling ring (6),
**characterized in that**
the decoupling ring (6) comprises a circumferential first radial decoupling region (32) which is in contact with the outer circumference (34) of the membrane (21) as well as a second radial decoupling region (33) with an axial front side (37), which is in contact with an axial front side (38) of the stiffening element (13),
wherein the axial front side (37) of the decoupling ring (6) forms a front, which faces in the direction towards a trim part (30) of the motor vehicle and is in contact with a back side of the stiffening element (13) that faces the ultrasonic sensor (2) and faces away from the trim part (30).

2. The ultrasonic sensor device (1) according to claim 1,
**characterized in that**
the second decoupling region (33) is formed by at least one side bar (36) which is arranged radially spaced apart from the first decoupling region (32) and extends in the axial direction and the axial front side (37) of which is in contact with the axial front side (38) of the stiffening element (13).

3. The ultrasonic sensor device (1) according to claim 2,
**characterized in that**
the at least one side bar (36) is designed to taper off towards the axial front side (37, 38).

4. The ultrasonic sensor device (1) according to claim 2 or 3,
**characterized in that**
the second radial decoupling region (33) is formed by a single side bar (36) which is designed to fit circumferentially around the first decoupling region (32).

5. The ultrasonic sensor device (1) according to claim 2 or 3,
**characterized in that**
at least two side bars (36) are arranged to be distributed spaced apart from each other in the circumferential direction, each of which comprises an axial front side (37) brought into contact with the axial front side (38) of the stiffening element (13).

6. The ultrasonic sensor device (1) according to any one of the preceding claims,
**characterized in that**
the first radial decoupling region (32) is arranged at a radial distance from the stiffening element (13) so that the decoupling ring (6) touches the stiffening element (13) exclusively via the second decoupling region (33).

7. The ultrasonic sensor device (1) according to any one of the preceding claims,
**characterized in that**
the second radial decoupling region (33) comprises a radially outwardly extending sealing lip (48), which is in contact with a radial inner circumference (49) of the stiffening element (13).

8. The ultrasonic sensor device (1) according to any one of the preceding claims,
**characterized in that**
the decoupling ring (6) is formed from a soft elastic material, in particular from silicone and/or from TPE plastic.

9. The ultrasonic sensor device (1) according to any one of the preceding claims,
**characterized in that**
the ultrasonic sensor device (1) comprises a holder (17) for the ultrasonic sensor (2) and the holder (17) comprises a receiving element (3) with a receptacle (23) for the stiffening element (13), wherein between a bottom (24) of the receptacle (23) and a back side (31) of the stiffening element (13) which faces the ultrasonic sensor (2) an attenuation disk (7) is arranged for echo attenuation.

10. The ultrasonic sensor device (1) according to claim 9,
**characterized in that**
the attenuation disk (7) is formed from a soft elastic material, in particular from silicone and/or from TPE plastic.

11. The ultrasonic sensor device (1) according to claim 9 or 10,
**characterized in that**
the attenuation disk (7) at its front (42) which faces the stiffening element (13) comprises a sound reduction structure (43), in particular a knob structure for dot-shaped contact with the back side (31) of the stiffening element (13).

12. The ultrasonic sensor device (1) according to any one of claims 9 to 11,
**characterized in that**
the attenuation disk (7) is designed as a component which is separate from the receiving element (3).

13. The ultrasonic sensor device (1) according to any one of claims 9 to 12,
**characterized in that**
the attenuation disk (7) is injection-moulded to the bottom (24) of the receptacle (23) of the receiving element (3).

14. The ultrasonic sensor device (1) according to any one of claims 9 to 13,
**characterized in that**
the attenuation disk (7) is integrally formed with the decoupling ring (6).

15. The ultrasonic sensor device (1) according to any one of claims 9 to 14,
**characterized in that**
the attenuation disk (7) is designed as a component which is separate from the decoupling ring (6).

## Revendications

1. Appareil de captage à ultrasons (1) pour un véhicule, avec un capteur à ultrasons (2), lequel présente une membrane en forme de pot (21), destinée à envoyer et / ou à recevoir des signaux ultrasonores, avec un anneau de découplage (6), lequel est agencé en appui, tout autour de la membrane (21), à une périphérie extérieure (34) de la membrane (21) et avec un élément raidisseur (13), lequel est agencé tout autour de l'anneau de découplage (6),
**caractérisé en ce que**
l'anneau de découplage (6) présente une première zone de découplage périphérique radiale (32), adjacente à la périphérie extérieure (34) de la membrane (21), ainsi qu'une seconde zone de découplage radiale (33), avec une face frontale axiale (37), laquelle s'appuie sur une face frontale axiale (38) de l'élément raidisseur (13),
la face frontale axiale (37) de l'anneau de découplage (6) formant une face avant, laquelle est tournée dans la direction d'une partie habillage (30) du véhicule et s'appuie sur une partie arrière, tournée vers le capteur à ultrasons (2) et éloignée de la partie habillage (30), de l'élément raidisseur (13).

2. Appareil de captage à ultrasons (1) selon la revendication 1,
**caractérisé en ce que**
la seconde zone de découplage (33) est formée par le biais d'au moins une entretoise (36), agencée éloignée radialement de la première zone de découplage (32) et s'étendant dans la direction axiale, dont la face frontale axiale (37) s'appuie sur la face frontale axiale (38) de l'élément raidisseur (13).

3. Appareil de captage à ultrasons (1) selon la revendication 2,
**caractérisé en ce que**
la au moins une entretoise (36) est constituée amincie par rapport à la face frontale axiale (37, 38).

4. Appareil de captage à ultrasons (1) selon la revendication 2 ou 3,
**caractérisé en ce que**
la seconde zone de découplage radiale (33) est formée par le biais d'une entretoise unique (36), constituée périphériquement tout autour de la première zone de découplage (32).

5. Appareil de captage à ultrasons (1) selon la revendication 2 ou 3,
**caractérisé en ce que**
au moins deux entretoises (36) sont agencées en étant réparties, éloignées l'une de l'autre dans le sens périphérique, lesquelles présentent respectivement une face frontale axiale (37), qui est amenée en appui avec la face frontale axiale (38) de l'élément raidisseur (13).

6. Appareil de captage à ultrasons (1) selon l'une des revendications précédentes,
**caractérisé en ce que**
la première zone de découplage radiale (32) est agencée suivant une distance radiale par rapport à l'élément raidisseur (13), de sorte que l'anneau de découplage (6) touche l'élément raidisseur (13) exclusivement par l'intermédiaire de la seconde zone de découplage (33).

7. Appareil de captage à ultrasons (1) selon l'une des revendications précédentes,
**caractérisé en ce que**
la seconde zone de découplage radiale (33) présente une lèvre d'étanchéité (48), qui s'étend radialement vers l'extérieur, laquelle s'appuie sur une périphérie intérieure radiale (49) de l'élément raidisseur (13).

8. Appareil de captage à ultrasons (1) selon l'une des revendications précédentes,
**caractérisé en ce que**
l'anneau de découplage (6) est formé dans un matériau doux, élastique, en particulier dans du silicone et / ou dans un élastomère thermoplastique (TPE).

9. Appareil de captage à ultrasons (1) selon l'une des revendications précédentes,
**caractérisé en ce que**
l'appareil de captage à ultrasons (1) présente un support (17) pour le capteur à ultrasons (2) et le support (17) présente une partie logement (3) avec un logement (23) pour l'élément raidisseur (13), un disque amortisseur (7) étant agencé, pour l'amortissement des résonnances, entre un fond (24) du logement (23) et une face arrière (31), tournée vers le capteur à ultrasons (2), de l'élément raidisseur (13).

10. Appareil de captage à ultrasons (1) selon la revendication 9,
**caractérisé en ce que**
le disque amortisseur (7) est formé dans un matériau doux, élastique, en particulier dans du silicone et / ou dans un élastomère thermoplastique (TPE).

11. Appareil de captage à ultrasons (1) selon la revendication 9 ou 10,
**caractérisé en ce que**
le disque amortisseur (7) présente, sur sa face avant (42), tournée vers l'élément raidisseur (13), une structure de réduction du bruit (43), en particulier une structure à nopes, pour l'appui ponctuel contre la face arrière (31) de l'élément raidisseur (13).

12. Appareil de captage à ultrasons (1) selon l'une des revendications 9 à 11,
**caractérisé en ce que**
le disque amortisseur (7) est constitué comme un composant séparé de la partie logement (3).

13. Appareil de captage à ultrasons (1) selon l'une des revendications 9 à 12,
**caractérisé en ce que**
le disque amortisseur (7) est injecté sur le fond (24) du logement (23) de la partie logement (3).

14. Appareil de captage à ultrasons (1) selon l'une des revendications 9 à 13,
**caractérisé en ce que**
le disque amortisseur (7) est constitué d'un seul tenant avec l'anneau de découplage (6).

15. Appareil de captage à ultrasons (1) selon l'une des revendications 9 à 14,
**caractérisé en ce que**
le disque amortisseur (7) est constitué comme un composant séparé de l'anneau de découplage (6).
